# EUROPEAN PATENT APPLICATION

(11) **EP 4 553 821 A1**
(43) Date of publication of application: **14.05.2025**
(21) Application number: 23857648.2
(22) Date of filing: 17.08.2023
(51) Int. Cl.: G09G 5/00, H04N 7/01, G09G 5/36, G02B 27/01, G06F 3/01, G09G 3/20

(54) **DISPLAY DEVICE AND WEARABLE DEVICE THAT ADJUST FRAME RATE, AND METHOD OF OPERATING SAME**

(30) Priority: 23.08.2022 KR 20220105665; 19.09.2022 KR 20220117841
(71) Applicant: Samsung Electronics Co., Ltd., Suwon-si, Gyeonggi-do 16677 (KR)
(72) Inventor: HONG, Myeongjae, Suwon-si Gyeonggi-do 16677 (KR)
(74) Representative: Nederlandsch Octrooibureau
(86) International application number: PCT/KR2023/012200
(87) International publication number: WO 2024/043614

(57) **Abstract**

An electronic device according to various embodiments may include: a display, a memory storing instructions, and at least one processor, comprising processing circuitry, operatively coupled to the display and the memory. At least one processor, individually and/or collectively, may be configured to determine an operating frequency based on displaying a video, and control outputting of a frame to display an execution screen of each of at least one application based on the determined operating frequency.

## Description

### [Technical Field]

The disclosure relates to a display device for adjusting a frame rate to display a video, a wearable device, and a method of operating the same.

### [Background Art]

An electronic device such as a display device or a wearable device may transmit to a display, video frames including video (e.g., a video, an augmented reality (AR) object, an extended reality (XR) object, or a virtual reality (VR) object) content or an execution program of an application to display a screen. The electronic device may transmit the video frame to the display at every cycle according to a frame rate of the video content or a frame rate of outputting the execution screen of the application. The frame rate may indicate the number of frames output per unit time. For example, the frame rate may indicate frames per second (fps). The video content may have a content frame rate corresponding to the number of frames presented by an original video per unit time. If the electronic device plays a video content according to playback settings, frames of the video content may be played based on the content frame rate

The display may periodically refresh the video frame transmitted to the display on the screen based on a display refresh rate (DRR) of the display. The DRR indicates a cycle of refreshing the screen actually displayed on the display. The DRR may be a value designated by a manufacturer of the display, and may be changed by controlling the display.

The foregoing information may be provided as related art for the purpose of aiding understanding of the disclosure. No claim or determination is made as to whether any of the foregoing may be applied as the prior art in connection with the disclosure.

### [Disclosure of Invention]

### [Solution to Problem]

A wearable device according to an embodiment may include: a display, a memory and at least one processor operatively coupled to the display and the memory. The at least one processor may be configured to execute at least one application an execution screen of which is output through the display. The at least one processor may be configured to identify a playback operation for playing a video output through the display based on a video playback application. The at least one processor may be configured to determine an operating frequency based on identifying the playback operation. The at least one processor may be configured to control outputting of a frame to display the execution screen of each of the at least one application based on the operating frequency. The at least one processor may be configured to control the display to output the video and each execution screen based on the operating frequency.

A method of operating an electronic device according to an embodiment may include executing at least one application, playing a video based on a video playback application, determining an operating frequency in response to playing the video, controlling a frame rate for outputting each execution screen of the at least one application based on the operating frequency and displaying the video and each execution screen of the at least one application based on the operating frequency.

A non-transitory computer-readable storage medium according to an embodiment may have recorded thereon a program which, when executed by at least one processor, comprising processing circuitry, of an electronic device, individually and/or collectively, causes an electronic device to: execute at least one application, play a video based on a video playback application, determine an operating frequency in response to playing the video, control a frame rate for outputting each execution screen of the at least one application based on the operating frequency and display the video and each execution screen of the at least one application based on the operating frequency.

### [Brief Description of Drawings]

FIG. 1 is a block diagram illustrating an electronic device in a network environment according to various embodiments;
FIG. 2 is a perspective view of an electronic device according to an embodiment.
FIG. 3 is a block diagram of an electronic device according to an embodiment.
FIG. 4 is a diagram illustrating an example of a screen displayed by an electronic device according to an embodiment.
FIG. 5 is a diagram for illustrating frames outputted by an electronic device and an operation for displaying them on a display.
FIG. 6 is a diagram for illustrating frames outputted by an electronic device to a display and a display operation according to an embodiment.
FIG. 7 is a diagram for illustrating an operation of an electronic device for processing frames outputted from an application which operates based on a higher frame rate than a display refresh rate of a display according to an embodiment.
FIG. 8 is a diagram for illustrating an operation of an electronic device for processing frames outputted from an application which operates based on a lower frame rate than a display refresh rate of a display according to an embodiment.
FIG. 9 is a flowchart for illustrating a process for an electronic device to play a video according to an embodiment.
FIG. 10 is a flowchart for illustrating an example of a process for an electronic device to determine an operating frequency according to an embodiment.
FIG. 11 is a diagram for illustrating a method for an electronic device to determine whether an operating condition is satisfied based on movement information according to an embodiment.
FIG. 12 is a flowchart for illustrating an example of a process for an electronic device to output an application execution screen according to an embodiment.
FIG. 13 is a flowchart for illustrating an example of a process for an electronic device to render a frame through an external device according to an embodiment.

### [Mode for Carrying out the Invention]

Hereinafter, various embodiments of the disclosure are described with reference to the attached drawings. However, it is not intended to limit the disclosure to specific embodiments, and should be understood to embrace various modifications, equivalents, and/or alternatives of the embodiments of the disclosure.

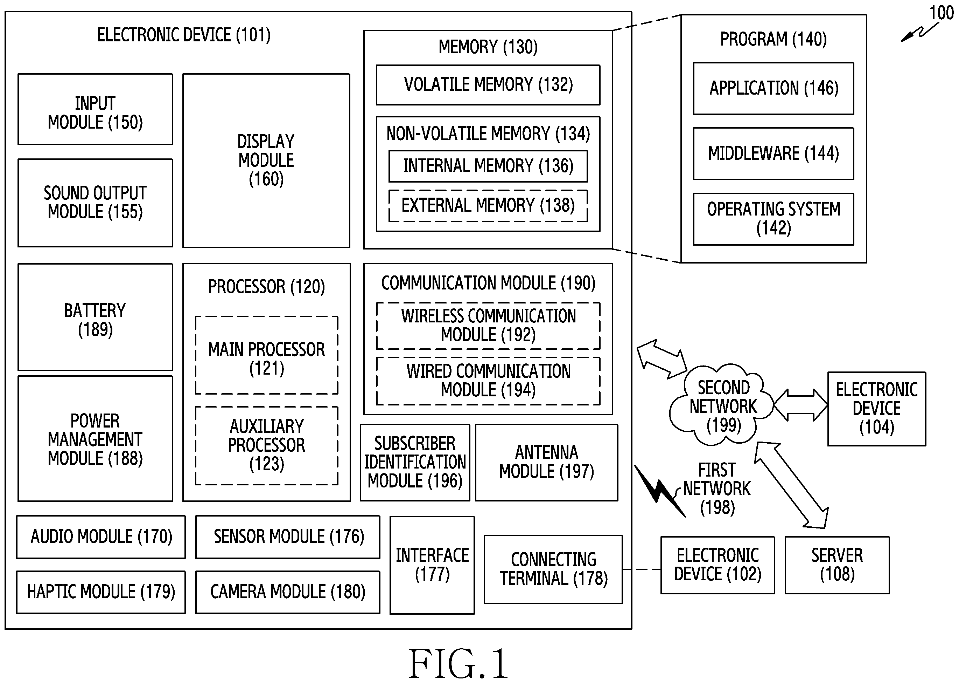

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

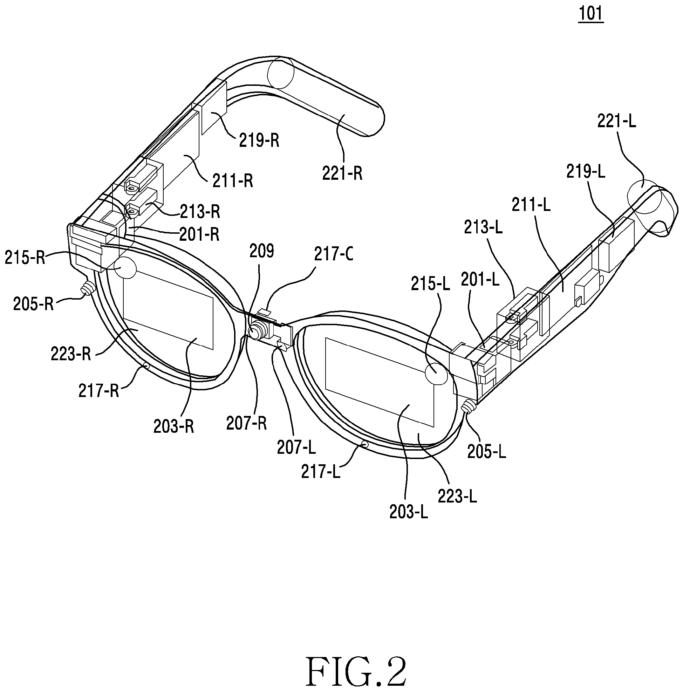

FIG. 2 is a perspective view of an electronic device 101 according to an embodiment. FIG. 2 illustrates an example in which the electronic device 101 is a wearable device of a head mounted display type. However, FIG. 2 illustrates the example of the form of the electronic device 101 according to an embodiment, and is not limited thereto. For example, the electronic device 101 may be implemented as a different type of a device including a display. In addition, FIG. 2 does not indicate that the electronic device 101 according to an embodiment must include all of components shown in FIG. 2. For example, the electronic device 101 according to an embodiment may be configured by excluding some of the components shown in FIG. 2. Some of the components in FIG. 2 may be replaced by other components.

Referring to FIG. 2, the electronic device 101 according to an embodiment may be changed in a physical state of the electronic device 101 using hinges 213-L and 213-R. For example, the electronic device 101 may fold temples of glasses or unfold the temples of the glasses through the hinges 213-L and 213-R.

According to an embodiment, the electronic device 101 may include a first optical output module 201-L, a second optical output module 201-R, a first display 203-L, a second display 203-R, first cameras 205-L and 205-R, second cameras 207-L and 207-R, a third camera 209, a first printed circuit board (PCB) 211-R, a second PCB 211-R, the hinges 213-L and 213-R, a first optical member 215-L, a second optical member 215-R, microphones 217-L, 217-R, and 217-C, speakers 219-L and 219-R, a first battery 221-L, a second battery 221-R, a first transparent member 223-L, and a second transparent member 223-R. In various embodiments, the electronic device 101 may include an additional component in addition to the components shown in FIG. 2, or may omit at least one of the components shown in FIG. 2.

According to an embodiment, a configuration positioned on the left side based on wearing of the electronic device 101 may be driven by power output from the first battery 221-L. A configuration positioned on the right side based on the wearing may be driven by power output from the second battery 221-R. However, it is not limited thereto. For example, the component included in the electronic device 101 may receive power from a single battery.

Configurations positioned on the temple of the glasses shown in FIG. 2 (e.g., the first PCB 211-L, the second PCB 211-R, the hinges 213-L and 213-R, the speakers 219-L and 219-R, the first battery 221-L, the second battery 221-R) are shown to be exposed to the outside, but this is for convenience of explanation, and the above configurations may be positioned inside in the electronic device 101 and not exposed to the outside.

According to an embodiment, the first optical output module 201-L and the second optical output module 201-R may be referred to as an optical output module 201. The first display 203-L and the second display 203-R may be referred to as a display 203 (e.g., the display module 160 of FIG. 1). The first PCB 211-L and the second PCB 211-R may be referred to as a PCB 211. The first optical member 215-L and the second optical member 215-R may be referred to as an optical member 215. The first battery 221-L and the second battery 221-R may be referred to as the batteries 221-L and 221-R and/or a battery 221. The first transparent member 223-L and the second transparent member 223-R may be referred to as a transparent member 223.

According to an embodiment, the electronic device 101 may be a wearable device. For example, the electronic device 101 may be the wearable device (e.g., an augmented reality (AR) glass, a smart glass, or a head mounted device (HMD)) in the form of glasses. However, this is only an example, and the disclosure is not limited thereto. The electronic device 101 in the glass form may operate while it is worn on a user's face. The transparent member 223 may be a transparent or translucent glass plate, plastic plate or polymer material such that the user may see the outside with the electronic device 101 worn on the user's face. In an embodiment, the first transparent member 223-L may be disposed to face a user's left eye, and the second transparent member 223-R may be disposed to face a user's right eye. The electronic device 101 may include only at least one of the first transparent member 223-L or the second transparent member 223-R. The electronic device 101 may be configured without including the first transparent member 223-L and the second transparent member 223-R.

According to an embodiment, the electronic device 101 may acquire (capture) an image of an external environment through the third camera 209, receive an AR object related to a location of the acquired image or an object (e.g., a thing, a person or building) included in the acquired image from another electronic device (e.g., a smartphone, a computer, a tablet persona computer (PC), or a server), and provide it to the user through the optical output module 201, the optical member 215, and the display 203.

According to an embodiment, the first cameras 205-L and 205-R, the second cameras 207-L and 207-R and the third camera 209 may be utilized to recognize a current scene or environment viewed through the optical member 215 of the electronic device 101.

According to an embodiment, the electronic device 101 may receive audio signals through the microphones 217-L, 217-R, and 217-C, and output audio signals through the speakers 219-L and 219-R.

According to an embodiment, a first charging module may be disposed on the first PCB 211-L. According to an embodiment, the electronic device 101 may charge the first battery 221-L through the first charging module (not shown). According to an embodiment, a second charging module may be disposed on the second PCB 211-R. According to an embodiment, the electronic device 101 may charge the second battery 221-R through the second charging module (not shown).

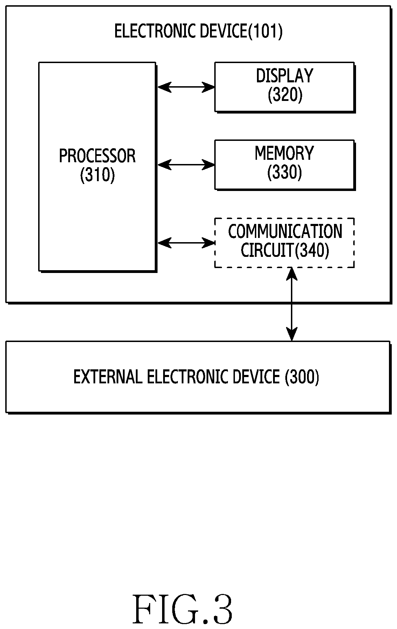

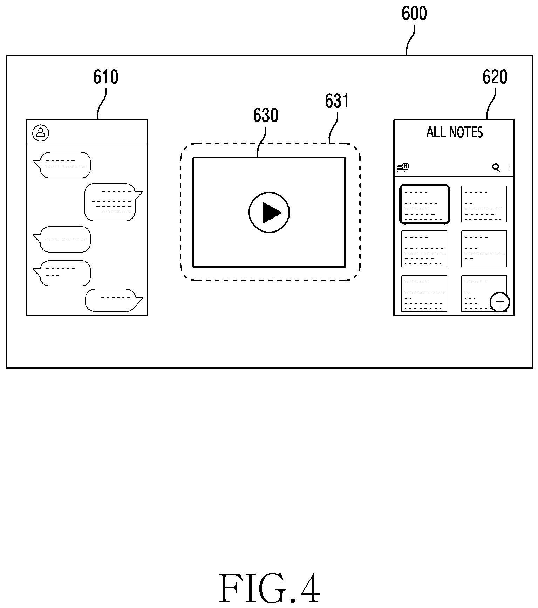

FIG. 3 is a block diagram illustrating an example configuration of an electronic device 101 according to various embodiments. FIG. 3 is illustrated as an example to explain components included in the electronic device 101 according to an embodiment, and various component(s) may be omitted or replaced. FIG. 4 is a diagram illustrating an example screen displayed by an electronic device according to various embodiments.

The electronic device 101 according to an embodiment may be an electronic device equipped with a display 320. The electronic device 101 may include a wearable device, but may also include other type of the electronic device. The electronic device 101 according to an embodiment may include a processor (e.g., including processing circuitry) 310 (e.g., the processor 120 of FIG. 1), the display 320 (e.g., the display module 160 of FIG. 1, the display 203 of FIG. 2), and a memory 330 (e.g., the memory 130 of FIG. 1). The processor 310 may be operatively coupled with the display 320 and the memory 330.

At least one processor 310 may include various processing circuitry and execute at least one application. At least one application may be stored in, for example, the memory 330. The processor 310 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. At least one processor 310 may display through the display 320 a screen including at least one execution screen of each of at least one application based on a frame output by executing the at least one application. For example, the processor 310 of the electronic device 101 may execute a first application and a second application. The electronic device 101 may display a first execution screen of the first application and a second execution screen of the second application within windows respectively through the display 320.

At least one processor 310 may play a video to be displayed on the display 320 based on a video playback application. The video playback application may be, for example, an application which plays video content stored in the memory 330 or frames received through Internet streaming.

At least one processor 310 may display the execution screen of each of at least one application and a video played by the video playback application through the display 320. At least one processor 310 may identify a playback operation for playing images to display the execution screen of each of the at least one application and the video together. Referring to FIG. 4, at least one processor 310 may control the display 320 to display a screen 600 including as a video 630 being played together with an execution screen 610 of a messenger application and an execution screen 620 of a memo application.

At least one processor 310 may determine an operating frequency, in response to identifying the playback operation. For example, at least one processor 310 may determine the operating frequency based on the frame rate of the video being played. If the video is played based on the frame rate of 60 Hz, at least one processor 310 may determine 60 Hz as the operating frequency.

At least one processor 310 may output the execution screen of each of at least one application based on the operating frequency. At least one processor 310 may synchronize timing at which the display 320 refreshes the screen and timing of outputting a frame to display the execution screen of each of at least one application based on the operating frequency. At least one processor 310 may control the display 320 to output the screen including the video and each execution screen based on the operating frequency.

According to an embodiment, at least one processor 310 may identify characteristics of at least one application executed. At least one processor 310 may output a frame for displaying the execution screen of each of at least one application based on the characteristics of the at least one application. For example, at least one processor 310 may identify whether the frame rate for outputting the frame to display the execution screen of each of the at least one application may be changed from information included in metadata of at least one application.

For example, if running the first application of which the frame rate of the output frames may be changed, at least one processor 310 may control the operation of the first application to output frames of the execution screen at a first frame rate corresponding to the determined operating frequency. If running the second application in which the frame rate of the output frames is fixed to a second frame rate, at least one processor 310 may control a rendering operation for the frames output by the second application based on the determined operating frequency. For example, if the second frame rate of the second application is greater than the operating frequency, the frames output from the second application may be rendered based on a rendering skip algorithm. The rendering skip algorithm may indicate a process of skipping rendering of some frame other than the frames to be displayed based on the operating frequency. If the second frame rate of the second application is lower than the operating frequency, late stage reprojection (LSR) may be applied to the frame rendered based on the operating frequency at least once.

The electronic device 101 according to an embodiment may output a frame for displaying the execution screen of each of at least one application based on the characteristics of at least one application only if the at least one processor 310 satisfies an operating condition.

According to an embodiment, the electronic device 101 may include a motion sensor (e.g., the sensor module 176 of FIG. 1) for detecting motion of the electronic device 101. The motion sensor may include, for example, at least one of an acceleration sensor, a gyro sensor, a gesture sensor, or an air pressure sensor. At least one processor 310 may determine whether the operating condition is satisfied based on motion information acquired through the motion sensor. For example, only if the magnitude of the motion included in the motion information is less than or equal to a threshold, at least one processor 310 may determine that the operating condition is satisfied. If the user wearing the electronic device 101 is moving, the user may not watch the displayed video (e.g., the video 630 of FIG. 4). Hence, if the magnitude of the movement included in the motion information is greater than the threshold, the played video deteriorates in quality but effect on user experience of the user may be low. Thus, if the magnitude of the movement included in the motion information is greater than the threshold, the electronic device 101 according to an embodiment may control the display 320 to display the video and the execution screen of each of at least one application based on a default frequency. The default frequency may indicate a display refresh rate for refreshing the screen of the display 320 if video content is not played. For example, if the display 320 operates based on the refresh rate of 90 Hz before the video playback, a video with the frame rate of 60 Hz are played, and the magnitude of the motion information is greater than or equal to the threshold, the display 320 may operate at the refresh rate of 90 Hz. Operation of at least one application may also operate based on the frame rate of 90 Hz. If the magnitude of the motion information is less than or equal to the threshold, at least one processor 310 may output the execution screen of at least one application based on the frame rate adjusted based on the determined operating frequency.

According to an embodiment, the electronic device 101 may further include a gaze detection sensor for detecting a user's gaze. For example, the electronic device 101 may obtain an image through a camera which captures a user's eyeball (e.g., the second cameras 207-L and 207-R of FIG. 2), and determine a gaze direction of the user's eyeball. Referring to FIG. 4, at least one processor 310 may determine whether the gaze direction is within a display area 631 corresponding to an area displaying the video 630. If the gaze direction is within the display area 631 corresponding to the area displaying the video 630, at least one processor 310 may determine that the operating condition is satisfied. If the detected gaze direction is within the display area 631 corresponding to the video, at least one processor 310 may output the video and the execution screen of each of at least one application according to the frame rate adjusted based on the operating frequency.

The electronic device 101 according to an embodiment may further include a communication circuit 340 (e.g., the communication module 190 of FIG. 1). The electronic device 101 may communicate with an external electronic device 300 through the communication circuit 340. The electronic device 101 may request the external electronic device 300 to render the video or the execution screen of each of at least one application. The external electronic device 300 may render the video and the execution screen of each of at least one application based on the request received from the electronic device 101. At least one processor 310 of the electronic device 101 may receive the rendering result through the communication circuit 340. At least one processor 310 may output the rendering result through the display 320.

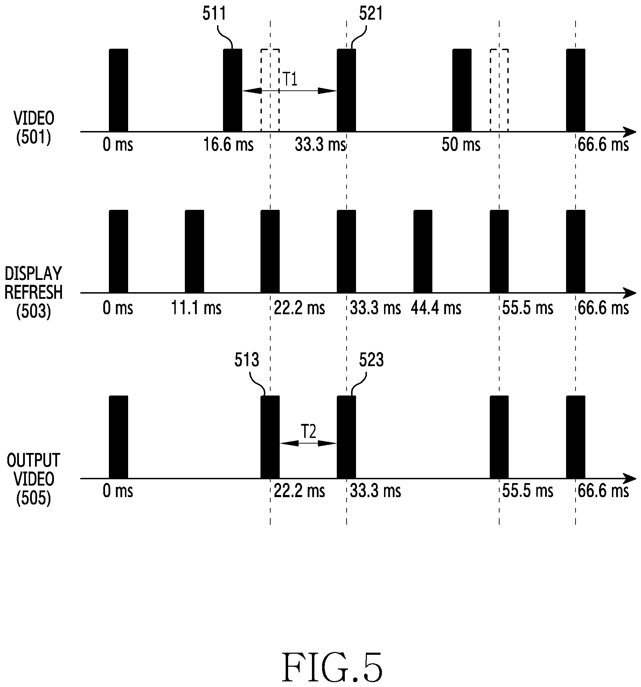

FIG. 5 is a diagram illustrating example frames output by an electronic device 101 and an operation for displaying them on a display 320.

FIG. 5 shows frames of a video 505 actually output if a video 501 played at the frame rate of about 60 Hz is output through the display 503 which is updated at the refresh rate of about 90 Hz.

Since the display is not updated at 16.6 ms at which a first frame 511 included in the video content 501 is output (or rendered), a first frame 513 may be displayed at 22.2 ms at which the display is refreshed. In addition, a second frame 521 included in the video content 510 may be displayed as a second frame 523 in the output video 505 of the display at 33.3 ms.

Referring to FIG. 5, an interval between the first frame 511 and the second frame 521 is T1 in the video content 501, but an interval between the first frame 513 and the second frame 523 may be output as T2 in the actual output video 505. In addition, the interval between the frames included in the actual output video 505 may not appear regularly. Hence, if the frame rate of the video content 501 and the display refresh rate of the display 320 are not synchronized, the quality of the video 505 output through the display 320 may deteriorate more than the quality of the original video content 501.

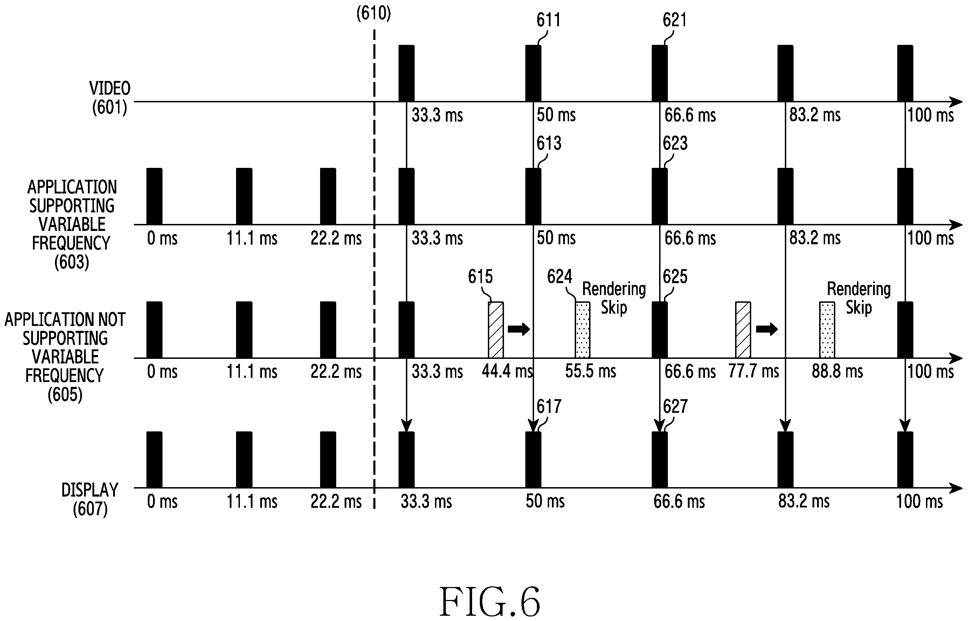

FIG. 6 is a diagram for explaining frames output by an electronic device 101 to a display 607 (e.g., the display 320 of FIG. 3 ) and operations of the display 320 according to an embodiment.

FIG. 6 relates to playing a video 601 while executing a first application 603 which may adjust the frame rate of output frames and a second application 605 which has a fixed frame rate.

The electronic device 101 may output the frames of the first application 603 and the second application 605 to the display 607 based on the frame rate (e.g., 90 Hz) corresponding to the default frequency until playback timing 610 of initiating the playback of the video 601. The electronic device 101 may update the screen displayed by the display 607 based on the refresh rate (e.g., 90 Hz) corresponding to the default frequency until the timing 610.

The electronic device 101 may initiate the playback of the video 601 played based on a first frame rate (e.g., 60 Hz) at the timing 610. For example, the electronic device 101 may initiate the playback of the video 601 in response to a user input (e.g., a voice input or a touch input) commanding the video playback. In response to identifying the playback operation which initiates the playback of the video 601, the electronic device 101 may control the display 607 to update the displayed screen based on the refresh rate (e.g., 60 Hz) corresponding to the first frame rate of the video 601. As the refresh rate of the display 607 operates based on the first frame rate, timing of outputting the video frames 611 and 621 and timings 617 and 627 of updating the screen of the display 607 may correspond to each other.

The electronic device 101 may control the first application 603 to output the frames based on the first frame rate. Timings at which the first application 603 with the adjusted frame rate for outputting the frames outputs the frames 613 and 623 may correspond to timings 617 and 627 at which the display 607 is updated.

The electronic device 101 may control an operation of the second application 605 for outputting the frames based on a second frame rate (e.g., 90 Hz). If the electronic device 101 outputs a frame 615 to the display 607 at 44.4 ms, the frame 615 may be displayed on the display 607 at 50 ms which is timing 617 of updating the display 607. In addition, the electronic device 101 may skip rendering of at least one frame 624. The electronic device 101 may skip rendering of the frame 624 and transmit a frame 625 corresponding to the display update timing 627 to the display 607.

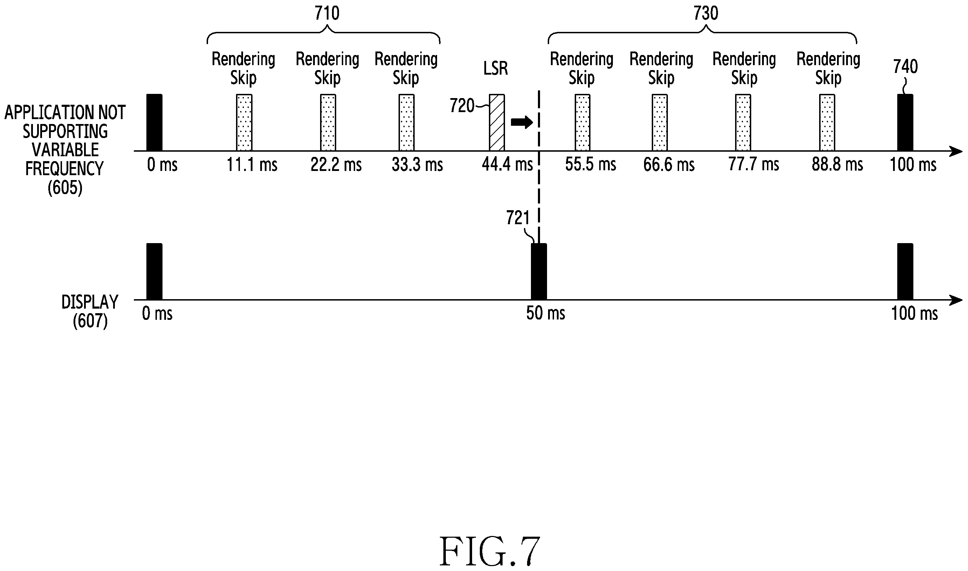

FIG. 7 is a diagram illustrating an operation of an electronic device 101 for processing frames output from an application 605 which operates based on a higher frame rate than a display refresh rate of a display 607 (e.g., the display 320 of FIG. 3) according to an embodiment.

The electronic device 101 may skip rendering of at least one frame 710 excluding a frame 720 to be displayed by updating the display 607 at timing 721. After rendering the frame 720 to be displayed on the display 607, the electronic device 101 may skip frame rendering 730 until a frame 740 displayed if the display 607 is updated next.

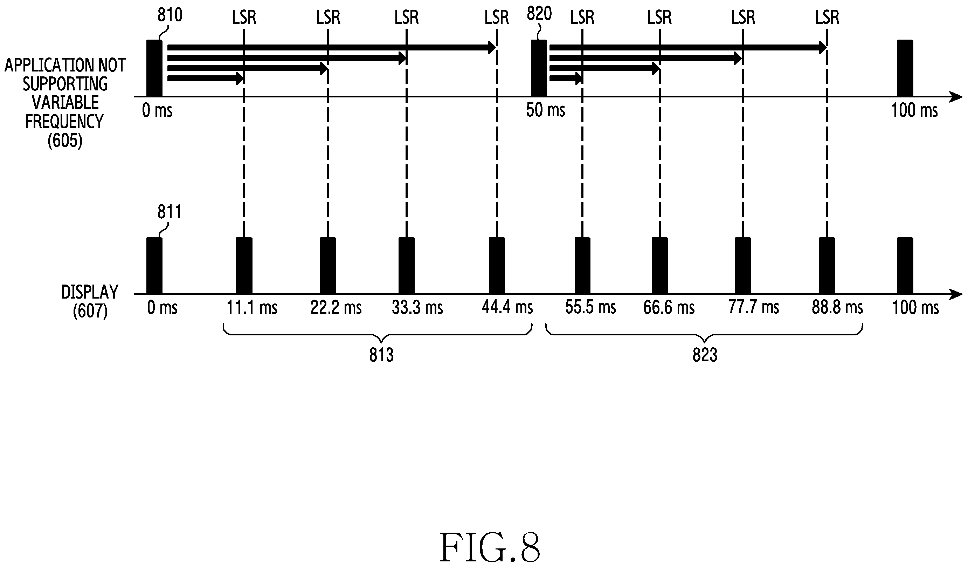

FIG. 8 is a diagram illustrating an operation of an electronic device 101 for processing frames output from an application 605 which operates based on a lower frame rate than a display refresh rate of a display 607 (e.g., the display 320 of FIG. 3) according to an embodiment.

The electronic device 101 may render a frame 810 to be displayed at timing 811 of updating the display 607. The electronic device 101 may perform the late stage reprojection on the rendered frame 810 to be display on the display 607 during a period 813 during which the display 607 is updated until a next frame 820 is output. The electronic device 101 may display the next frame 820 on the display 607 during a period 823 after the next frame 820 is output.

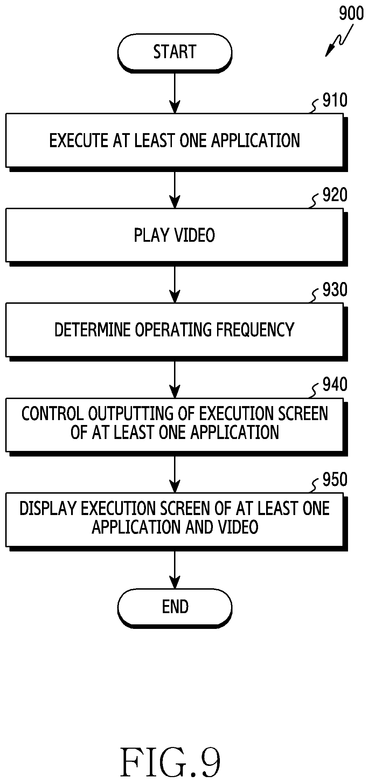

FIG. 9 is a flowchart 900 illustrating a process for an electronic device 101 to play a video according to an embodiment. The process of FIG. 9 may be understood as being performed by the operations of at least one processor of the electronic device 101.

The electronic device 101 may execute at least one application in operation 910. The electronic device 101 may display a frame for displaying an execution screen of at least one application on the display. In an embodiment, the frame rate for outputting frames to display the execution screen in operation 910 may correspond to the display refresh rate of the display.

The electronic device 101 may play a video in operation 920. The electronic device 101 may play the video to be displayed on the display 320 based on a video playback application for reproducing videos. The electronic device 101 may display the played video together with the execution screen of each of the at least one application executed in operation 910 on the display 320.

In response to identifying the video playback operation, the electronic device 101 may determine the operating frequency in operation 930. The operating frequency may be an appropriate frequency for displaying a video on the display 320. For example, the operating frequency may be a frequency corresponding to the frame rate of the video.

In operation 940, the electronic device 101 may control outputting the execution screen of at least one application based on the operating frequency. The electronic device 101 according to an embodiment may adjust the frame rate for outputting the frame to display the execution screen based on the operating frequency. The electronic device 101 may control rendering a frame for execution based on the operating frequency. Rendering the frame for the execution screen of at least one application according to an embodiment may be carried out by the processor (e.g., the processor 310 of FIG. 3) of the electronic device 101. However, the disclosure is not limited thereto. For example, the electronic device 101 may request an external electronic device connected to the electronic device 101 to render the frame, and receive the rendering result from the external electronic device.

In operation 950, the electronic device 101 may display the execution screen of at least one application and the video through the display based on the operating frequency.

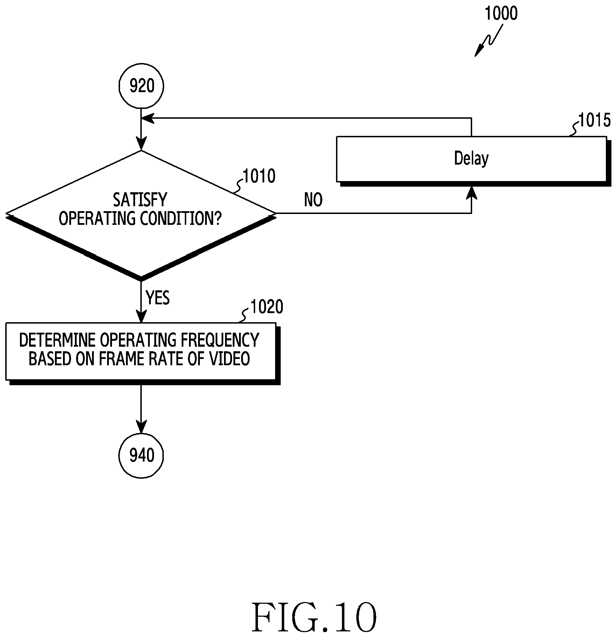

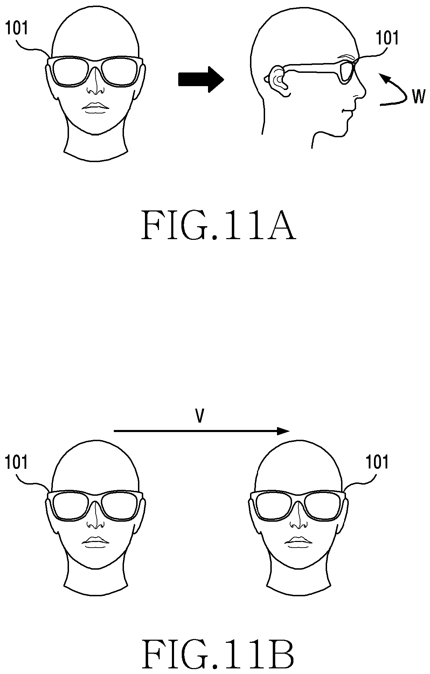

FIG. 10 is a flowchart 1000 illustrating an example process for an electronic device 101 to determine an operating frequency according to an embodiment. FIG. 11 is a diagram for illustrating a method for an electronic device to determine whether an operating condition is satisfied based on motion information according to an embodiment.

In response to identifying the video playback operation in operation 920, the electronic device 101 may determine whether the operating condition is satisfied in operation 1010. The operating condition may be a condition for determining whether a high-quality video is to be provided to the user. For example, the operating condition may be a condition for determining whether the user is focusing on the video. The operating condition may include whether the user's gaze direction is toward the display area where the video is displayed. As another example, the operating condition may include whether the magnitude of the motion according to the motion information of the electronic device 101 is smaller than or equal to the threshold. Referring to (a) of FIG. 11, the electronic device 101 may detect an angular velocity w detected as the user rotates. Referring to (b) of FIG. 11, the electronic device 101 may detect a moving velocity v detected as the user moves. The operating condition may include whether a value determined based on at least one of the angular velocity w or the moving velocity v falls below a threshold.

If the operating condition is not satisfied in operation 1010, the electronic device 101 may monitor whether the operating condition is satisfied by repeatedly performing operation 1010 after delay in operation 1015. The electronic device 101 may display an execution screen of at least one application based on the frame rate corresponding to the default frequency while the operating condition is not satisfied.

If the operating condition is satisfied in operation 1010, the electronic device 101 may determine the operating frequency based on the frame rate of the played video in operation 1020. The electronic device 101 may perform operation 940 based on the determined operating frequency.

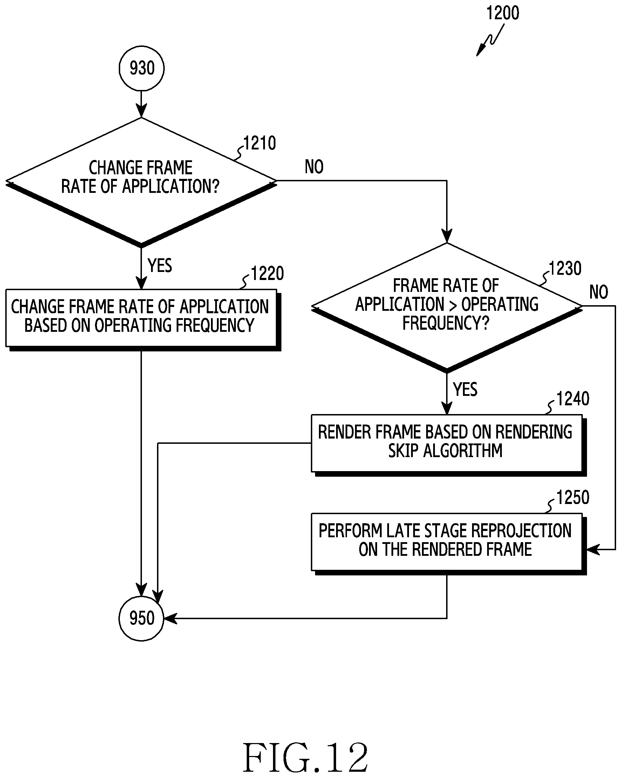

FIG. 12 is a flowchart 1200 illustrating an example process for an electronic device 101 an output an application execution screen according to an embodiment.

In operation 1210, the electronic device 101 may determine whether the frame rate of the running application may be changed. For example, the electronic device 101 may identify whether the frame rate of the application may be changed, from metadata of the application stored in the electronic device 101. As another example, the electronic device 101 may transmit identification information of the application to an external device (e.g., a server), and obtain information for identifying the frame rate of the application may be changed in response to the transmitted identification information. If identifying that the running application may change the frame rate, the electronic device 101 may change the frame rate of the application based on the operating frequency determined in operation 930, in operation 1220.

If identifying that the frame rate of the running application is fixed in operation 1210, the electronic device 101 may determine whether the fixed frame rate of the application is greater than the operating frequency in operation 1230.

If the fixed frame rate of the application is greater than the operating frequency, the electronic device 101 may render a frame for displaying the execution screen of the application based on the rendering skip algorithm in operation 1240. For example, the electronic device 101 may control the operations of the application and the display as shown in FIG. 7.

If the fixed frame rate of the application falls below the operating frequency, the electronic device 101 may apply the late stage reprojection to at least one rendered frame and display it on the display in operation 1250. For example, the electronic device 101 may control the operations of the application and the display as shown in FIG. 8.

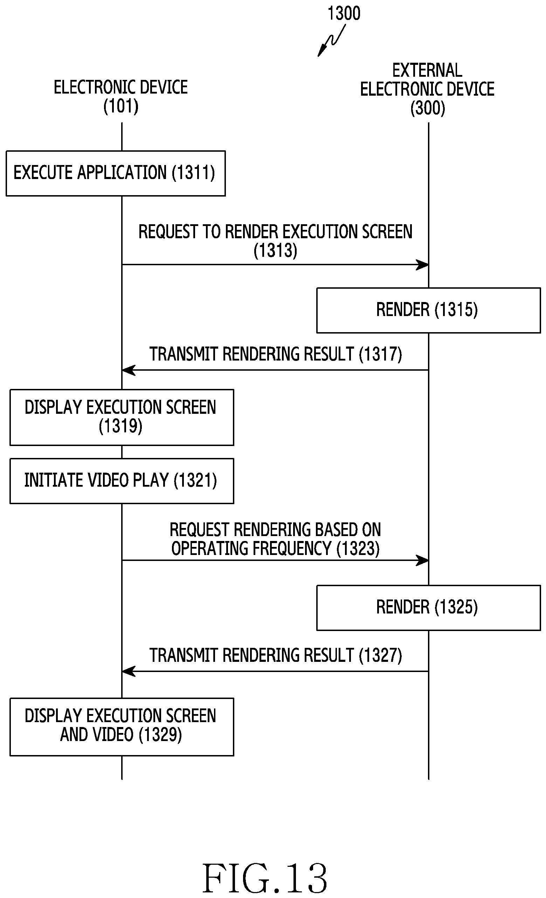

FIG. 13 is a flowchart 1300 illustrating an example of a process for an electronic device 101 to render a frame through an external device 300 according to an embodiment.

In operation 1311, the electronic device 101 may execute at least one application. In operation 1313, the electronic device 101 according to an embodiment may transmit a rendering request to the external electronic device 300 to render an execution screen of at least one application.

In operation 1315, the external electronic device 300 may render the execution screen in response to the rendering request. The external electronic device 300 may transmit a rendering result to the electronic device 101 in operation 1317. The electronic device 101 may display the execution screen based on the rendering result received from the external electronic device 300 in operation 1319.

In operation 1321, the electronic device 101 may initiate video playback to be displayed together with the displayed execution screen. The electronic device 101 may determine the operating frequency as in operation 930. In operation 1323, the electronic device 101 may transmit a rendering request based on the determined operating frequency to the external electronic device 300. For example, the electronic device 101 may transmit the frame of the application execution screen output based on the operating frequency and the played video to the external electronic device 300. The external electronic device 300 may render the execution screen and the video to be displayed based on the rendering request received in operation 1325.

In operation 1327, the external electronic device 300 may transmit a rendering result including frames for the rendered video and the execution screen to the electronic device 101. In operation 1329, the electronic device 101 may display the application execution screen and the video content based on the rendering result received from the external electronic device 300.

If the electronic device including the display displays the video content with a high frame rate, an abnormal screen may be displayed. The abnormal screen display may be referred to as a tearing phenomenon as the screen appears to be torn. The tearing phenomenon may occur because the frame output every second is higher than the refresh frequency of the display. To address the tearing phenomenon, the display refresh rate of the display and the frame rate of the output frame may be synchronized.

However, to synchronize the display refresh rate and the frame rate, the application must support a function for adjusting the frame rate of the frame output from the application. However, the user needs to execute an application not supporting the above function on the electronic device.

In addition, it is difficult to arbitrarily change the content frame rate of the video content. For example, if a video source is 30 fps and the video source is played at 2x speed, the frame rate of the frames output to play the video content must be output at 60 fps.

In addition, the electronic device may display the execution screen of each of at least one or more applications and the video content played by the video application together. If the electronic device synchronizes the display refresh rate and the frame rate based on the frame rate of frames output from one application, the quality of the screen outputting frames of another application may deteriorate.

For example, a wearable device which provides an AR service or an extended reality service may operate with a relatively high display refresh rate (e.g., 90 Hz) as the default frequency to prevent dizziness of the wearer. In contrast, video content (e.g., an Internet streaming video) may be played at a relatively low frame rate (e.g., 60 Hz). If the wearable device plays the video content while operating based on the high display refresh rate, the quality of the output video content may deteriorate.

The technical problem to be achieved in this document is not limited to the technical problem mentioned above, and other technical problem not mentioned may be clearly understood by those skilled in the art from the description below.

An electronic device and an operating method thereof according to various embodiments may, if playing a video having a different frame rate from a display refresh rate of a display of the electronic device, display the video with appropriate quality even though an execution screen of another application is concurrently displayed.

An electronic device and an operating method thereof according to various embodiments may display a video played based on whether a user focuses on the played video and thus display the video appropriate to a user's intention.

An electronic device and an operating method thereof according to various embodiments may reduce computation to be conducted by the electronic device by omitting unnecessary rendering.

An electronic device and an operating method thereof according to various embodiments may display an appropriate application execution screen based on whether an application supports a function of adjusting a frame rate of output frames.

Effects obtainable from the disclosure are not limited to the above-mentioned effects, and other effects which are not mentioned may be clearly understood by those skilled in the art of the disclosure through the above descriptions.

A wearable device (e.g., the electronic device 101 of FIG. 1, the electronic device 101 of FIG. 2, the electronic device 101 of FIG. 3, the electronic device 101 of FIG. 11) according to an embodiment may include a display (e.g., the display 160 of FIG. 1, the first display 203-L of FIG. 2, the second display 203-R, the display 320 of FIG. 3), a memory (e.g., the memory 130 of FIG. 1, the memory 330 of FIG. 3) and at least one processor (e.g., the processor 120 of FIG. 1, the processor 310 of FIG. 3), operatively coupled to the display (e.g., the display 160 of FIG. 1, the first display 203-L of FIG. 2, the second display 203-R, the display 320 of FIG. 3) and the memory (e.g., the memory 130 of FIG. 1, the memory 330 of FIG. 3). The at least one processor (e.g., the processor 120 of FIG. 1, the processor 310 of FIG. 3), may be configured to: execute at least one application, an execution screen of which is output through the display (e.g., the display 160 of FIG. 1, the first display 203-L of FIG. 2, the second display 203-R, the display 320 of FIG. 3). The at least one processor (e.g., the processor 120 of FIG. 1, the processor 310 of FIG. 3) may identify a playback operation for playing a video output through the display (e.g., the display 160 of FIG. 1, the first display 203-L of FIG. 2, the second display 203-R, the display 320 of FIG. 3) based on a video playback application. The at least one processor (e.g., the processor 120 of FIG. 1, the processor 310 of FIG. 3) may determine an operating frequency based on identifying the playback operation. The at least one processor (e.g., the processor 120 of FIG. 1, the processor 310 of FIG. 3) may control outputting of a frame to display the execution screen of each of the at least one application based on the operating frequency. The display (e.g., the display 160 of FIG. 1, the first display 203-L of FIG. 2, the second display 203-R, the display 320 of FIG. 3) may output the video and each execution screen based on the operating frequency under control of the at least one processor (e.g., the processor 120 of FIG. 1, the processor 310 of FIG. 3).

The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) according to an embodiment may be configured to determine the operating frequency based on a frame rate of frames included in the video played by the video playback application.

The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) according to an embodiment may be configured to control a frame rate corresponding to a cycle at which the at least one application outputs frames corresponding to each execution screen based on characteristics of the at least one application or rendering of the frames corresponding to each execution screen.

The wearable device (e.g., the electronic device 101 of FIG. 1, the electronic device 101 of FIG. 2, the electronic device 101 of FIG. 3, the electronic device 101 of FIG. 11) according to an embodiment may further include a communication circuit. The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) may be configured to transmit information requesting to render the frames to an external electronic device which renders the frames corresponding to each execution screen through the communication circuit based on the operating frequency.

The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) according to an embodiment may be configured to, based on characteristics of a first application included in the at least one application indicating that a first frame rate of output frames is adjustable, adjust the first frame rate for the first application based on the operating frequency.

The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) according to an embodiment may be configured to, based on characteristics of a second application included in the at least one application indicating that a second frame rate of output frames is fixed, control to render the frames output by the second application based on the operating frequency.

The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) according to an embodiment may be configured to skip rendering on at least a part of the frames output by the second application, based on the second frame rate being higher than the operating frequency.

The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) according to an embodiment may be configured to display frames output by the second application by applying late stage reprojection, based on the second frame rate being lower than the operating frequency.

The wearable device (e.g., the electronic device 101 of FIG. 1, the electronic device 101 of FIG. 2, the electronic device 101 of FIG. 3, the electronic device 101 of FIG. 11) according to an embodiment may include a motion sensor configured to detect movement of the wearable device (e.g., the electronic device 101 of FIG. 1, the electronic device 101 of FIG. 2, the electronic device 101 of FIG. 3, the electronic device 101 of FIG. 11). The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) may be configured to obtain motion information through the motion sensor. The at least one processor (e.g., the processor 120 of FIG. 1, the processor 310 of FIG. 3) may be configured to determine whether to output the video and each execution screen based on the operating frequency based on the motion information.

The motion sensor of the wearable device (e.g., the electronic device 101 of FIG. 1, the electronic device 101 of FIG. 2, the electronic device 101 of FIG. 3, the electronic device 101 of FIG. 11) according to an embodiment may be configured to detect at least one of an angular velocity at which the wearable device (e.g., the electronic device 101 of FIG. 1, the electronic device 101 of FIG. 2, the electronic device 101 of FIG. 3, the electronic device 101 of FIG. 11) rotates or a movement velocity at which a position of the wearable device (e.g., the electronic device 101 of FIG. 1, the electronic device 101 of FIG. 2, the electronic device 101 of FIG. 3, the electronic device 101 of FIG. 11) moves. The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) may be configured to compare at least one of an angular velocity value or a movement velocity value obtained through the motion sensor with a threshold. The at least one processor (e.g., the processor 120 of FIG. 1, the processor 310 of FIG. 3) may be configured to, based on at least one of the angular velocity value or the movement velocity value being less than or equal to the threshold, output the video and each execution screen based on the frame rate adjusted based on the operating frequency. The at least one processor (e.g., the processor 120 of FIG. 1, the processor 310 of FIG. 3) may be configured to, and based on at least one of the angular velocity value or the movement velocity value being greater than the threshold, output the video and each execution screen based on a default frequency.

The wearable device (e.g., the electronic device 101 of FIG. 1, the electronic device 101 of FIG. 2, the electronic device 101 of FIG. 3, the electronic device 101 of FIG. 11) according to an embodiment may further include a gaze detection sensor configured to detect a gaze of a user wearing the wearable device (e.g., the electronic device 101 of FIG. 1, the electronic device 101 of FIG. 2, the electronic device 101 of FIG. 3, the electronic device 101 of FIG. 11). The at least one processor (e.g., the processor 120 of FIG. 1, the processor 310 of FIG. 3) of the wearable device (e.g., the electronic device 101 of FIG. 1, the electronic device 101 of FIG. 2, the electronic device 101 of FIG. 3, the electronic device 101 of FIG. 11) may be configured to determine whether a gaze direction of the user detected through the gaze detection sensor is toward a video display area where the video is displayed. The at least one processor (e.g., the processor 120 of FIG. 1, the processor 310 of FIG. 3) may be configured to, in response to determining that the gaze direction is toward inside of the video display area, output the video and each execution screen based on the frame rate adjusted based on the operating frequency. The at least one processor (e.g., the processor 120 of FIG. 1, the processor 310 of FIG. 3) may be configured to, in response to determining that the gaze direction is toward outside of the video display area, output the video and each execution screen based on a default frequency.

The wearable device (e.g., the electronic device 101 of FIG. 1, the electronic device 101 of FIG. 2, the electronic device 101 of FIG. 3, the electronic device 101 of FIG. 11) may be implemented with an electronic device of another type for playing and outputting content through the display (e.g., the display 160 of FIG. 1, the first display 203-L of FIG. 2, the second display 203-R, the display 320 of FIG. 3).

An operating method of an electronic device may include executing at least one application (e.g., operation 910 of FIG. 9), playing a video based on a video playback application (e.g., operation 920 of FIG. 9), determining an operating frequency in response to playing the video (e.g., operation 930 of FIG. 9), controlling a frame rate for outputting each execution screen of the at least one application based on the operating frequency (e.g., operation 940 of FIG. 9) and displaying the video and each execution screen of the at least one application based on the operating frequency (e.g., operation 950 of FIG. 9).

According to an embodiment, determining the operating frequency may include determining the operating frequency based on a frame rate of frames included in the video played by the video playback application.

According to an embodiment, controlling the frame rate may include, based on a first application included in the at least one application allowing adjusting of a first frame rate of output frames, adjusting the first frame rate for the first application based on the operating frequency.

According to an embodiment, controlling the frame rate may include, based on a second frame of frames output by a second application included in the at least one application being fixed, controlling rendering of the frames output by the second application based on the operating frequency.

According to an embodiment, controlling rendering of the frames output by the second application based on the operating frequency may include skipping rendering of at least a part of the frames output by the second application, based on the second frame rate being higher than the operating frequency.

According to an embodiment, controlling rendering of the frames output by the second application based on the operating frequency may include applying late stage reprojection to frames output by the second application, based on the second frame rate being lower than the operating frequency.

According to an embodiment, determining the operating frequency may include obtaining motion information of the wearable device (e.g., the electronic device 101 of FIG. 1, the electronic device 101 of FIG. 2, the electronic device 101 of FIG. 3, the electronic device 101 of FIG. 11) through the motion sensor, and determining the operating frequency based on the motion information.

According to an embodiment, determining the operating frequency based on the motion information may include: comparing at least one of an angular velocity value or a movement velocity value obtained through the motion sensor with a threshold, based on at least one of the angular velocity value or the movement velocity value being less than or equal to the threshold, outputting the video and each execution screen based on the frame rate adjusted based on the operating frequency, and based on at least one of the angular velocity value or the movement velocity value being greater than the threshold, outputting the video and each execution screen based on a default frequency.

According to an embodiment, determining the operating frequency may include: detecting a gaze of a user wearing the wearable device (e.g., the electronic device 101 of FIG. 1, the electronic device 101 of FIG. 2, the electronic device 101 of FIG. 3, the electronic device 101 of FIG. 11) through a gaze detection sensor, determining whether a gaze direction of the user is toward a video display area displaying the video, in response to determining that the gaze direction of the user is toward inside of the video display area, outputting the video and each execution screen based on a frame rate adjusted based on the operating frequency, and in response to determining that the gaze direction of the user is toward outside of the video display area, outputting the video and each execution screen based on a frame rate adjusted based on a default frequency.

A non-transitory computer-readable storage medium according to an embodiment may have recorded thereon a program which, when executed, causes an electronic device to: execute at least one application, play a video based on a video playback application, determine an operating frequency in response to playing the video, control a frame rate for outputting each execution screen of the at least one application based on the operating frequency and display the video and each execution screen of the at least one application based on the operating frequency.

The methods according to the embodiments described in the claims or the specification of the disclosure may be implemented in software, hardware, or a combination of hardware and software.

In software implementation, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the various embodiments described in the disclosure.

Such a program (software module, software) may be stored to a random access memory, a non-volatile memory including a flash memory, a read only memory (ROM), an electrically erasable programmable ROM (EEPROM), a magnetic disc storage device, a CD-ROM, digital versatile discs (DVDs) or other optical storage devices, and a magnetic cassette. Alternatively, it may be stored to a memory combining part or all of them. In addition, a plurality of memories may be included.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the disclosure through an external port. In addition, a separate storage device on the communication network may access the device which executes an embodiment of the disclosure.

In the specific embodiments of the disclosure, the component included in the disclosure is expressed in a singular or plural form. However, the singular or plural expression is appropriately selected according to a proposed situation for the convenience of explanation, the disclosure is not limited to a single component or a plurality of components, the components expressed in the plural form may be configured as a single component, and the components expressed in the singular form may be configured as a plurality of components.

In addition, a term such as "unit" or "module" in the disclosure may be a hardware component such as a processor or a circuit, and/or a software component executed by a hardware component such as a processor.

A "unit" and "module" may be stored in an addressable storage medium and implemented by a program executable by the processor. For example, "unit" and "module" may be implemented by components such as software components, object-oriented software components, class components and task components, processes, functions, attributes, procedures, sub-routines, segments of program code, drivers, firmware, microcode, circuitry, data, databases, data structures, tables, arrays and variables.

Various implementations described in this disclosure are merely embodiments, and are not intended to limit the scope of the disclosure in any way. For the sake of brevity of the disclosure, disclosure of conventional electronic configurations, control systems, software, and other functional aspects of the systems may be omitted.

In addition, in the disclosure, "including at least one of a, b, or c" may indicate "including a alone, including b alone, including c alone, including a and b, including b and c, including a and c, or including all of a, b, and c".

Meanwhile, while the specific embodiment has been described in the detailed explanation of the disclosure, it will be noted that various modifications may be made without departing from the scope of the disclosure. Therefore, the scope of the disclosure is not limited and defined by the described embodiment and is defined by not only the scope of the claims as below but also their equivalents.

## Claims

1. Awearable device comprising:
a display;
a memory; and
at least one processor operatively coupled to the display and the memory,
wherein the at least one processor is configured to:
execute at least one application, an execution screen of which is output through the display,
identify a playback operation for playing a video output through the display based on a video playback application,
determine an operating frequency based on identifying the playback operation,
control outputting of a frame to display the execution screen of each of the at least one application based on the operating frequency, and
control the display to output the video and each execution screen based on the operating frequency.

2. The wearable device of claim 1, wherein the at least one processor is configured to determine the operating frequency based on a frame rate of frames included in the video played by the video playback application.

3. The wearable device of claim 1, wherein the at least one processor is configured to, based on characteristics of the at least one application, control a frame rate corresponding to a cycle at which the at least one application outputs frames corresponding to each execution screen or rendering of the frames corresponding to each execution screen.

4. The wearable device of claim 3, further comprising:
a communication circuit,
wherein the at least one processor is configured to,
transmit information requesting to render the frames to an external electronic device configured to render the frames corresponding to each execution screen through the communication circuit based on the operating frequency.

5. The wearable device of claim 1, wherein the at least one processor is configured to,
based on characteristics of a first application included in the at least one application indicating that a first frame rate of output frames is adjustable, adjust the first frame rate for the first application based on the operating frequency.

6. The wearable device of claim 1, wherein the at least one processor is configured to,
based on characteristics of a second application included in the at least one application indicating that a second frame rate of output frames is fixed, control rendering the frames output by the second application based on the operating frequency.

7. The wearable device of claim 6, wherein the at least one processor is configured to skip rendering on at least a part of the frames output by the second application, based on the second frame rate being higher than the operating frequency.

8. The wearable device of claim 6, wherein the at least one processor is configured to display frames output by the second application by applying late stage reprojection, based on the second frame rate being lower than the operating frequency.

9. The wearable device of claim 1, wherein the wearable device comprises a motion sensor configured to detect movement of the wearable device, and
the at least one processor is configured to:
obtain motion information through the motion sensor, and
determine whether to output the video and each execution screen based on the operating frequency based on the motion information.

10. The wearable device of claim 9, wherein the motion sensor is configured to detect at least one of an angular velocity at which the wearable device rotates or a movement velocity at which a position of the wearable device moves, and
the at least one processor is configured to,
compare at least one of an angular velocity value or a movement velocity value obtained through the motion sensor with a threshold,
based on at least one of the angular velocity value or the movement velocity value being less than or equal to the threshold, output the video and each execution screen based on the frame rate adjusted based on the operating frequency, and
based on at least one of the angular velocity value or the movement velocity value being greater than the threshold, output the video and each execution screen based on a default frequency.

11. The wearable device of claim 1, further comprising:
a gaze detection sensor configured to detect a gaze of a user wearing the wearable device,
wherein the at least one processor is configured to,
determine whether a gaze direction of the user detected through the gaze detection sensor is toward a video display area where the video is displayed,
in response to determining that the gaze direction is toward inside of the video display area, output the video and each execution screen based on the frame rate adjusted based on the operating frequency, and
in response to determining that the gaze direction is toward outside of the video display area, output the video and each execution screen based on a default frequency.

12. A method of operating an electronic device, comprising:
executing at least one application;
playing a video based on a video playback application;
determining an operating frequency in response to playing the video;
controlling a frame rate for outputting each execution screen of the at least one application based on the operating frequency; and
displaying the video and each execution screen of the at least one application based on the operating frequency.

13. The method of claim 12, wherein determining the operating frequency comprises,
determining the operating frequency based on a frame rate of frames included in the video played by the video playback application.

14. The method of claim 12, wherein controlling the frame rate comprises,
based on a first application included in the at least one application being allowed to adjust a first frame rate of output frames, adjusting the first frame rate for the first application based on the operating frequency.

15. The method of claim 12, wherein controlling the frame rate comprises,
based on a second frame of frames output by a second application included in the at least one application being fixed, controlling rendering of the frames output by the second application based on the operating frequency.
